# EUROPEAN PATENT APPLICATION

(11) **EP 3 357 313 A1**
(43) Date of publication of application: **08.08.2018**
(21) Application number: 18154564.1
(22) Date of filing: 01.02.2018
(51) Int. Cl.: A01B 1/16

(54) **A GARDEN TOOL**

(30) Priority: 07.02.2017 SI 201700040
(71) Applicant: Vrhunc, Joze, 4260 Bled (SI)
(72) Inventor: Vrhunc, Joze, 4260 Bled (SI)
(74) Representative: Ivancic, Bojan

(57) **Abstract**

The present invention refers to a plant removal tool, in particular to a tool for removing plants that are unwanted in a garden such as all sorts of weeds, including the roots, comprising a work section and a holding section, wherein the work section is particularly but not exclusively formed to fast and simple remove weeds with deep roots such as goutweed, bindweed, sorts of grass with underground living roots and similar, with minimal intervention into the ground and without damaging the neighbouring plants. Disclosed is a garden tool which comprises a handle (1) and a tool body (2), wherein the tool body (2) comprises a fastening section (3) a first end thereof configured to be connected with said handle (1), and a work section (4) running in an extension of the opposite end of said fastening section (3). At least one part of each side surface (7, 8) of the work section (4) is formed in the sense of a blade.

## Description

The present invention refers to a plant removal tool, in particular to a tool for removing plants that are unwanted in a garden such as all sorts of weeds, including the roots, comprising a work section and a holding section, wherein the work section is particularly but not exclusively formed to fast and simple remove weeds with deep roots such as goutweed, bindweed, sorts of grass with underground living roots and similar, with minimal intervention into the ground and without damaging the neighbouring plants.

A weed removal garden tool of the aforementioned kind has been disclosed in the publication of the international patent application No. WO2005011355 A1. Disclosed tool comprises a handle connected to a shaft having a straight portion and an angled portion. A tool head is coupled to the angled portion such that the tool head can engage weeds in the ground when the tool is in use. The tool head includes one or more weed removing structures that engage and remove weeds.

Further, a hand-weeding device is known form the publication of the European patent application No. EP 2 380 419 A1. Said device has a fork type metal tool connected to a handle at a lower end of the tool. The tool includes teeth of different lengths, and side extension parts providing the pivot effort to the ground so as to facilitate side tilting movement of the tool.

Yet further, the publication of the international patent application No. WO2014000080 A1 discloses a garden hand-weeding tool which distributes gripping forces in order to effectively grip and remove plants, including their roots, from the soil without crushing or severing them and without clogging the apparatus. Said tool generally comprises pivotally connected specially contoured jaw and handle assemblies, a non-crushing gripping zone, and an opening for soil and debris to exit the gripping zone upon repetitive use.

Yet further, a garden tool has been disclosed in the European patent application No. EP 1 258 183 A1, wherein the tool with a non-slip handle grip is designed for immediate and not difficult removal of deep-rooted plants. The body of the tool is of rigid and strong construction, with angled cutting faces and includes a plant/soil containment chamber.

Said know weed removal tools are rather simple in construction, however, they do not fulfil entirely the requirements set forth with manual weeding. On one hand, the tools are adapted to unilateral specific needs and, respectively, tasks, and on the other hand, removal of weed from surfaces heavily overgrown with cultivated plants is made difficult leading to damaging of overground and underground parts of cultivated plants. In addition, removing weeds from gaps, such as between walking tiles, is limited to relatively wide gaps only, whereas the weeds and particularly roots thereof can not be removed from narrow gaps by means of know tools.

It is the object of the present invention to create a garden tool with which weeds, including roots thereof may be efficiently removed on all types of grounds.

According to the present invention, the object as set above is solved by features set forth in the characterising part of claim 1. Detail of the invention is disclosed in respective subclaims.

A garden tool according to the invention comprises a handle and a tool body, wherein the tool body comprises an approximately rectilinear extending fastening section a first end thereof configured to be connected with said handle, and a work section having side surfaces and running in an extension of the opposite end of said fastening section. Said work section which is curved in plane or space, comprises at its opposite free end a top section that is substantially narrower than the rest of the tool body. In essence, said work section extends from said fastening section in the direction towards said top section in a sense of a right rectangular prism curved in a plane or a space. According to the invention, at least a part of each side surface of the work section is formed in the sense of a blade which extends in said plane curve or space curve in the direction from said top section towards the interconnection area of the work section and the fastening section.

The invention is further described in detail by way of non-limiting embodiment, and with a reference to the accompanying drawings, where
- Fig. 1: a three-dimensional view of a garden tool according to the invention;
- Fig. 2: a front view of a garden tool of Fig. 1;
- Fig. 3: a side view of a garden tool of Fig. 1.

A garden tool according to the invention comprises a handle 1 and a tool body 2 associated therewith. Said tool body 2 comprises an approximately rectilinear extending fastening section 3 the first end thereof is configured to be connected with said handle 1, and a curved work section 4, running in an extension of the second i.e. the opposite end of said fastening section 3. The fastening section 3 can be formed with a cross-section unchanged over the entire length thereof, or it can be formed with a cross-section which more or less continuously and/or smoothly varies in longitudinal direction thereof. In the present embodiment, the fastening section 3 is formed in a sense of a right square prism. A connection between said handle 1 and said fastening section 3 is either fixed or detachable. In the latter case, either the handle 1 can be replaced and the tool body 2 can be kept or vice versa. Said handle 1 is produced of an arbitrary non-slip material having a good grip in a hand of a user, such as of wood or plastic, whereas the tool body 2 is preferably produced of a metal, such as of a wear resistant metal.

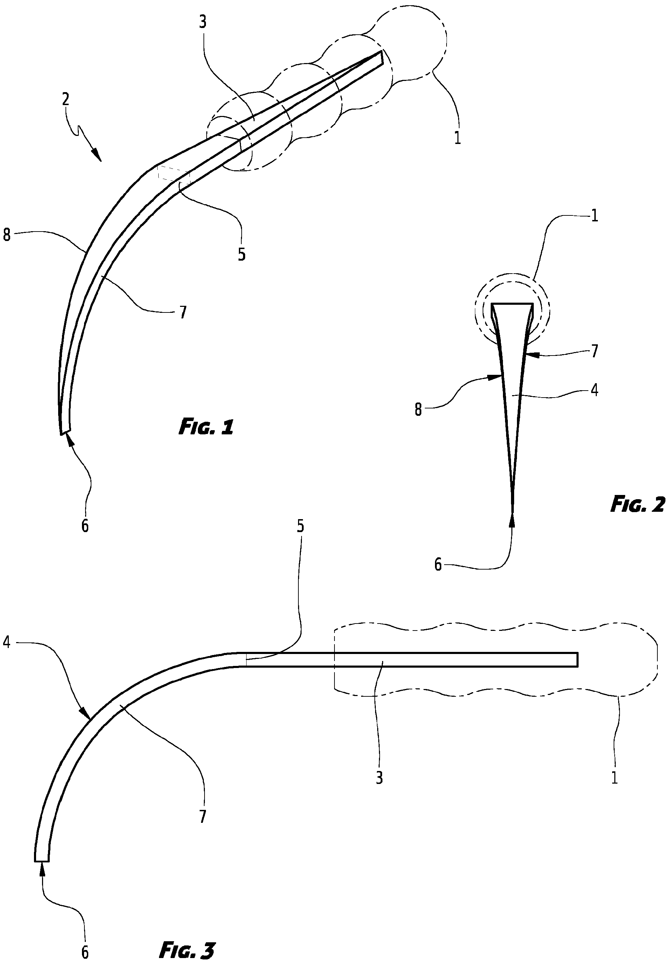

Said curved work section 4 being associated with its first end in an interconnection area 5 (shown with dashed line in Fig. 1) with the second end of said fastening section 3, comprises at its opposite free end a top section 6 which is substantially narrower than the rest of the tool body 2. In particular, the top section 6 is substantially narrower than the work section 4 at the place 5 of interconnection thereof with the fastening section 3.

Furthermore, each side surface 7, 8 of said curved work section 4 is formed in a sense of a blade, said blade formation extends over at least part of the extension of said curve and in direction from said top section 6 towards said interconnection area 5. Said blades can be produced by machining the side surfaces 7, 8 of the work section 4. Alternatively, said blades can be formed during plastic deformation of said tool body 2 when the work section 4 thereof is transformed in the sense of said curve into a tool. Said plastic deformation can be selected between forging and/or bending and/or similar.

With the present embodiment, said first end of the work section 4 interconnected with said second end of the fastening section 3 is formed in a cross-sectional view as an approximate rectangular which passes over at least via a piecewise continuous and smooth curve into said top section 6. In particular, it is provided with the preferred embodiment that the work section 4 is formed in a sense of a right square prism which is arched over said curve in the direction from its base towards its top. It is provided for according to the present invention that said curve of the work section 4, which originates in the area 5 of interconnection with the fastening section 3, extends over an arch of approximately π/2, preferably over an arch of at least π/2. Said curve which is either a plane curve or a space curve, is selected in the preferred embodiment as a conic, a polygonal chain and similar.

Moreover, it is provided for with the present embodiment that said top section 6 is formed in its utmost and, respectively, the most narrow cross-section as an approximate rectangular. The height of said rectangular which represents the thickness of the work section 4, essentially equals the height of said rectangular in the area 5 of interconnection between said first end of the work section 4 and said second end of the fastening section 3. Further, it is provided according to the present invention that said rectangular representing the top section 6 lies in a plane which is approximately perpendicular to the plane of said rectangular in said interconnection area 5. Yet further, it is provided according to the present invention that said rectangular representing the top section 6 substantially narrower than said rectangular in the interconnection area 5. Yet further, it is provided according to the present invention that the transition of said rectangular which represents the top section 6, into said rectangular in the interconnection area 5 is approximately linear.

Obviously, it is possible for the work section 4 to be formed also with different cross-section without departing from the spirit of the invention. Thus, for instance, either the cross-section in the interconnection area 5 and/or the cross-section in the utmost area of the top section 6 can be formed as an arbitrary equal or different polygons. In addition, it is also possible for said transition from said rectangular which represents the top section 6, into said rectangular in the interconnection area 5 is non-linear.

## Claims

1. The present invention refers to a plant removal tool, in particular to a tool for removing plants that are unwanted in a garden such as all sorts of weeds, ***characterized in that*** said tool comprises a handle (1) and a tool body (2), wherein the tool body (2) comprises a fastening section (3) a first end thereof configured to be connected with said handle (1), and a work section (4) having side surfaces (7, 8) and running in an extension of the opposite end of said fastening section (3), wherein at least one part of each side surface (7, 8) of the work section (4) is formed in the sense of a blade.

2. A garden tool according to claim 1, ***characterized in that*** said work section (4) comprises at its opposite free end a top section (6).

3. A garden tool according to claims 1 and 2, ***characterized in that*** said work section (4) is curved in plane or space, whereas said fastening section (3) extends approximately rectilinearly.

4. A garden tool according to claims 1 to 3, ***characterized in that*** said first end of the work section (4) which is interconnected with said second end of the fastening section (3), is formed in the cross-section as an approximate rectangular which which passes over at least via a piecewise continuous curve into said top section (6).

5. A garden tool according to claim 4, ***characterized in that*** said curve which can be either a plane curve or a space curve is selected as a conic, a polygonal chain and similar.

6. A garden tool according to claims 4 and 5, ***characterized in that*** said curve of the work section (4) originating in the area (5) of interconnection with the fastening section (3), extends over an arch of approximately π/2, preferably over an arch of at least π/2.

7. A garden tool according to any of the preceding claim, ***characterized in that*** the interconnection between said handle (1) and said fastening section (3) is either fixed or detachable.

8. A garden tool according to any of the preceding claim, ***characterized in that*** said handle (1) is produced of a non-slip material having a good grip.

9. A garden tool according to any of the preceding claim, ***characterized in that*** said the tool body (2) is produced of metal.

10. A garden tool according to claim 8, ***characterized in that*** said the tool body (2) is produced of a wear resistant metal.
